(19) Europäisches Patentamt
European Patent Office
Office européen des brevets

(11) **EP 3 769 968 B1**

(12) **EUROPEAN PATENT SPECIFICATION**

(45) Date of publication and mention
of the grant of the patent:
**05.04.2023 Bulletin 2023/14**

(21) Application number: **20187547.3**

(22) Date of filing: **23.07.2020**

(51) International Patent Classification (IPC):
*B41J 2/36* *(2006.01)*    *B41J 2/155* *(2006.01)*
*B41J 2/205* *(2006.01)*    *B41J 2/21* *(2006.01)*
*B41J 2/52* *(2006.01)*    *B41J 2/525* *(2006.01)*
*B41J 25/00* *(2006.01)*

(52) Cooperative Patent Classification (CPC):
**B41J 2/2054; B41J 2/2139; B41J 2/2146;**
B41J 2025/008

(54) **IMAGE FORMING APPARATUS AND DOT PATTERN ADJUSTMENT METHOD**

BILDERZEUGUNGSVORRICHTUNG UND PUNKTMUSTERANPASSUNGSVERFAHREN

APPAREIL DE FORMATION D'IMAGE ET PROCÉDÉ DE RÉGLAGE D'UN MOTIF DE POINTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.07.2019 JP 2019136306**

(43) Date of publication of application:
**27.01.2021 Bulletin 2021/04**

(73) Proprietor: **KONICA MINOLTA, INC.
Tokyo
100-7015 (JP)**

(72) Inventors:
• **Washio, Koji**
**Tokyo, Tokyo 100-7015 (JP)**
• **Mizutani, Toshiyuki**
**Tokyo, Tokyo 100-7015 (JP)**

(74) Representative: **Henkel & Partner mbB
Patentanwaltskanzlei, Rechtsanwaltskanzlei
Maximiliansplatz 21
80333 München (DE)**

(56) References cited:
**JP-A- 2009 100 230    US-A1- 2008 079 959
US-A1- 2014 139 885**

## Description

## BACKGROUND OF THE INVENTION

### 1. Field of the Invention

The present invention relates to an image forming apparatus and a dot pattern adjustment method.

### 2. Description of Related Art

Conventionally, in a case where a photographic image such as a face photograph is reproduced with a pseudo continuous tone, it is known that FM screening is often used in an image forming apparatus of a one-pass inkjet printing system, for example.

In an image forming apparatus of this type, a failing nozzle, a nozzle curvature or the like in an ink discharge section frequently occurs so that streak-like noise is likely to occur in a recording medium-conveying direction. The streak-like noise is likely to interfere with Amplitude Modulation (AM) screening that is a regular arrangement, but hardly interferes with Frequency Modulation (FM) screening that is a random dot arrangement.

That is, since it is possible to stabilize image quality against the streak-like noise by using the FM screening, the FM screening is often used in an image forming apparatus of an inkjet printing system.

However, when observing a photographic image such as a face photograph, the photographic image is often observed by gaze, sometimes with an observation distance of less than 30 cm. Accordingly, there is a case where an observer who gazes at a photographic image may point out deterioration in granularity due to a feeling of roughness peculiar to random dots in the FM screening.

The feeling of roughness peculiar to random dots is perceived as a result of irregularly scattered radical changes in the visual density of each of randomly arranged dots. For example, in an image forming apparatus including four inks of the YMCK colors, one factor in causing the scattered radical changes in density is overlapping of dot patterns of the C and M colors.

The density of each of the dot patterns of the C and M colors is not so high by itself, but the density of an overlapping portion of the respective dot patterns of the C and M colors becomes high, and the overlapping portion becomes easily visually recognizable by an observer.

On the other hand, the Y color does not contribute much to the visual density, and therefore does not affect the visual density even when the Y color overlaps with another color. Further, the K color has a high density even by itself, and therefore does not affect the visual density even when the K color overlaps with any color.

A skin color portion of a face photograph is expressed mainly by the respective dot patterns of the M and Y colors when the density is low, and a dot pattern(s) of the C color or/and the K color is/are added thereto as the density becomes higher. As a result of the addition of the dot pattern of the C color as mentioned above, there are more cases where the dot patterns of the C and M colors overlap, and the feeling of roughness increases as the density of the overlapping portion of the respective dot patterns of the C and M colors becomes higher.

Given the above, conventionally, in a case where a photographic image is reproduced with a pseudo continuous tone, granularity of a skin color portion of the photographic image poses a problem. Accordingly, a dot arrangement in which overlapping of the respective dot patterns of two colors is reduced is desired.

For example, Japanese Patent Application Laid-Open No. H10-157167 discloses a method for dotting by using one dither matrix and comparing the dither matrix with a combined value of signals of two colors. Further, Japanese Patent Application Laid-Open No. 2000-092323 discloses a method for generating and using dot patterns of two colors having a mutually inverted relationship.

US 2008/079959 A1 discloses an image processing apparatus which converts multiple-value image data of an image into a plurality of dot patterns to form the image on a recording medium including: a corrected recording element signal table storage device which stores a plurality of corrected recording element signal tables respectively for the graduated tone numbers, each of the corrected recording element signals being one of corrected recording element signal numbers and determined so that banding caused by recording characteristics of the recording elements is corrected in accordance with a correlation between each of the recording elements and surrounding recording elements of said each of the recording elements; a one-dimensional dot pattern table storage device which stores a one-dimensional dot pattern table which specifies a one-dimensional dot pattern for each of the corrected recording element signal numbers; a corrected recording element signal conversion device which converts the multiple-value image data into a one-dimensional sequence of the corrected recording element signals in the first direction correlated with the positions of the recording elements, by selecting the corrected recording element signals from one of the corrected recording element signal tables corresponding to the graduated tone value of each of the pixels according to a position and the graduated tone value of said each of the pixels; and a one-dimensional dot pattern conversion device which converts each of the corrected recording element signals of the one-dimensional sequence in the first direction into the one-dimensional dot pattern in the second direction, by reading out the one-dimensional dot pattern composed of a prescribed number of dot pixels, from the one-dimensional dot pattern table.

JP 2009 100230 A teaches that control points of a halftone screen are input, the halftone screen is Voronoi-segmented into polygons surrounding the control points and dot-lattice points included in respective polygons in the halftone screen are displaced non-periodically and at random. Then, Voronoi polygons each of which includes the displaced dot-lattice point are generated and a threshold matrix is created for making each halftone dot grow around while taking the centroid of each Voronoi polygon as the center of growth in a shape approximately similar to the Voronoi polygon.

## SUMMARY OF THE INVENTION

In the configuration described in Japanese Patent Application Laid-Open No. H10-157167, however, two colors are processed simultaneously so that the processing becomes complicated. Further, since one dot pattern is generated with two colors, the dotting in a dot pattern of one color and the dotting in a dot pattern of two colors are continuous, and may come into contact, although not overlap, with each other. Accordingly, in a case where out-of-color-registration occurs, the respective dot patterns of the two colors are likely to overlap.

Further, although the configuration described in Japanese Patent Application Laid-Open No. 2000-092323 exhibits an effect in a pattern in which dots are caused to grow as in the AM screening, it is believed that overlapping of the respective dot patterns of the two colors occurs in a case where the configuration is applied to the FM screening. In a process of generating a dot pattern of the FM screening, dots of isolated points are grown by dotting at locations as far as possible from surrounding points so that the isolated points are dispersed at uniform distances. Accordingly, when continuing the dotting, the dotting is performed ultimately from positions close to the surrounding points. Therefore, a pattern in which dots of two colors are adjacent to each other is formed so that, in terms of the relationship between the dot diameter and the pixel pitch, the respective dot patterns of the two colors may overlap at the time when the dots of the two colors are adjacent to each other.

An object of the present invention is to provide an image forming apparatus and a dot pattern adjustment method capable of reducing overlapping of respective dot patterns of two colors.

To achieve at least one of the abovementioned objects, there is provided an image forming apparatus as set out in independent claim 1, and a dot pattern adjustment method as set out in independent claim 7. Advantageous developments are defined in the dependent claims.

## BRIEF DESCRIPTION OF DRAWINGS

The advantages and features provided by one or more embodiments of the invention will become more fully understood from the detailed description given hereinbelow and the appended drawings which are given by way of illustration only, and thus are not intended as a definition of the limits of the present invention:

FIG. 1 is a diagram illustrating a schematic configuration of an image forming apparatus according to an embodiment of the present invention;
FIG. 2 is a block diagram illustrating a main functional configuration of the image forming apparatus;
FIG. 3 is a diagram for explaining dot generation of a second dot pattern;
FIG. 4 is a diagram for explaining the dot generation of the second dot pattern;
FIG. 5 is a flowchart illustrating one operation example when executing pattern generation control in the image forming apparatus;
FIG. 6 is a diagram for explaining dot position adjustment of a first dot pattern; and
FIG. 7 is a diagram for explaining the dot position adjustment of the first dot pattern.

## DESCRIPTION OF THE PREFERRED EMBODIMENTS

Hereinafter, one or more embodiments of the present invention will be described with reference to the drawings.

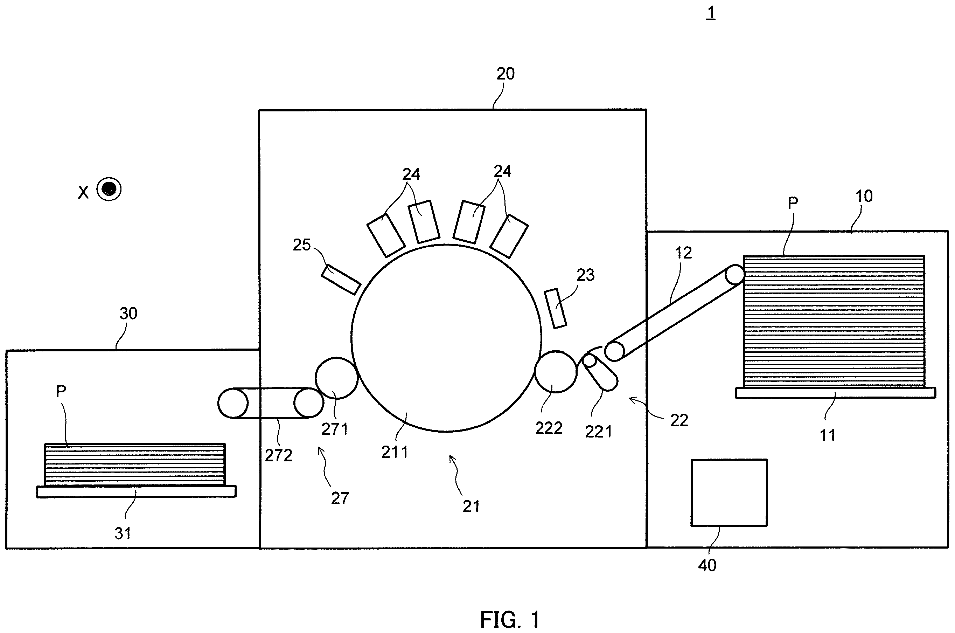

Hereinafter, an embodiment of the present invention will be described in detail below based on the accompanying drawings. FIG. 1 is a diagram illustrating a schematic configuration of image forming apparatus 1 according to the embodiment of the present invention.

Image forming apparatus 1 is an inkjet image forming apparatus that records an image on recording medium P. Image forming apparatus 1 includes sheet feed section 10, image forming section 20, sheet ejection section 30, and control section 40.

Under control by control section 40, image forming apparatus 1 conveys recording medium P stored in sheet feed section 10 to image forming section 20, discharges ink onto recording medium P in image forming section 20 to record an image, and conveys recording medium P on which the image is recorded to sheet ejection section 30.

For details, image forming apparatus 1 records a color image on recording medium P by overlaying and outputting each of four colors of yellow (Y), magenta (M), cyan (C), and black (K) on recording medium P with a predetermined number of recording gradations for each of the colors.

As recording medium P, it is possible to use paper, such as normal paper and coated paper, as well as various media, such as a fabric and a sheet-like resin, that can fix the ink impacted on the surface.

Sheet feed section 10 includes sheet feed tray 11 that stores recording medium P, and medium supply section 12 that conveys and supplies recording medium P from sheet feed tray 11 to image forming section 20. Medium supply section 12 includes a ring-shaped belt whose inner side is supported by two rollers, and conveys recording medium P from sheet feed tray 11 to image forming section 20 by rotating the rollers in a state in which recording medium P is placed on the belt.

Image forming section 20 includes conveyance section 21, transfer unit 22, heating section 23, head unit 24, fixing section 25, delivery section 27, and the like.

Conveyance section 21 holds recording medium P placed on a conveyance surface of conveyance drum 211 that has a cylindrical shape, and conveyance drum 211 rotates and moves around a rotation axis (cylindrical axis) extending in an X direction perpendicular to FIG. 1 so that recording medium P on conveyance drum 211 is conveyed in a conveying direction along the conveyance surface.

Conveyance drum 211 includes a claw section (not illustrated) and an intake section (not illustrated) for holding recording medium P on the conveyance surface of conveyance drum 211. An edge of recording medium P is pressed by the claw section, and recording medium P is pulled toward the conveyance surface by the intake section so that recording medium P is held on the conveyance surface.

Transfer unit 22 is provided at a position between medium supply section 12 of sheet feed section 10 and conveyance section 21, and holds and takes up one end of recording medium P, which is conveyed from medium supply section 12, with swing arm section 221, and transfers recording medium P to conveyance section 21 via transfer drum 222.

Heating section 23 is provided between a position where transfer drum 222 is arranged and a position where head unit 24 is arranged, and heats recording medium P such that recording medium P conveyed by conveyance section 21 is at a temperature within a predetermined temperature range. Heating section 23 includes, for example, an infrared heater or the like, and energizes the infrared heater based on a control signal supplied from control section 40 to cause the infrared heater to generate heat.

Head unit 24 records the image by discharging the ink onto recording medium P from a nozzle opening section provided in an ink discharge surface facing the conveyance surface of conveyance drum 211 at an appropriate timing in accordance with the rotation of conveyance drum 211 on which recording medium P is held.

Head unit 24 is arranged such that the ink discharge surface and the conveyance surface are apart from each other by a predetermined distance. In image forming apparatus 1 of the present embodiment, four head units 24 corresponding to inks of four colors of Y, M, C, and K, respectively, are arranged so as to be aligned at predetermined intervals in an order of the Y, M, C, and K colors from an upstream side of the recording medium P-conveying direction. Head unit 24 corresponds to the "ink discharge section" of the present invention.

Head unit 24 is used at a fixed position when the image is recorded, and records the image with a single pass method by successively discharging the ink at a predetermined interval (conveying direction interval) at different positions in the conveying direction in accordance with the conveyance of recording medium P.

Note that, the configuration of head unit 24 is not limited to the above configuration as long as a plurality of recording elements are provided at positions different from each other in the X direction.

Fixing section 25 includes an energy ray irradiation section arranged over a width of the X direction of conveyance section 21, and irradiates recording medium P placed on conveyance section 21 with an energy ray such as an ultraviolet ray from the energy ray irradiation section to cure and fix the ink discharged onto recording medium P. The energy ray irradiation section of fixing section 25 is arranged facing the conveyance surface between a position where head unit 24 is arranged and a position where transfer drum 271 of delivery section 27 is arranged in the conveying direction.

Delivery section 27 includes belt loop 272 that includes a ring-shaped belt whose inner side is supported by two rollers, and transfer drum 271 that has a cylindrical shape and transfers recording medium P from conveyance section 21 to belt loop 272. Delivery section 27 uses belt loop 272 to convey recording medium P transferred from conveyance section 21 onto belt loop 272 by transfer drum 271 so that recording medium P is sent to sheet ejection section 30.

Sheet ejection section 30 includes sheet tray 31 which has a plate shape and on which recording medium P sent from image forming section 20 by delivery section 27 is placed.

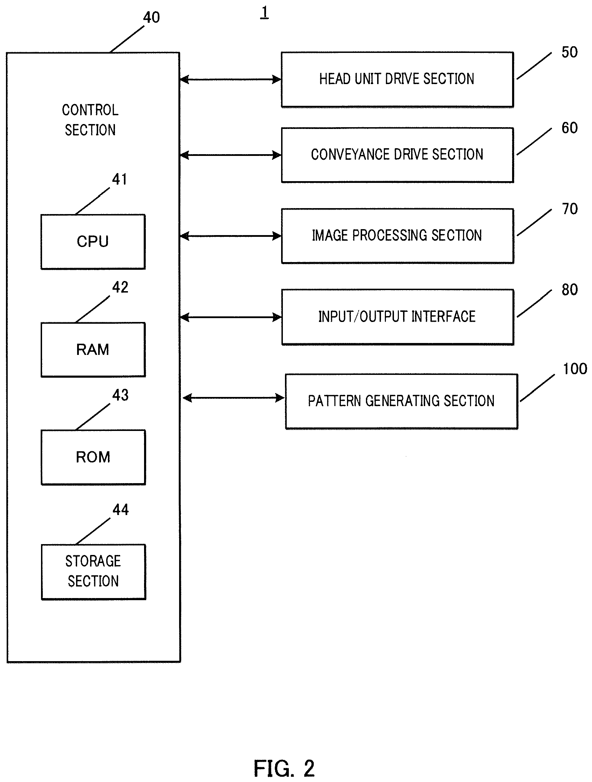

FIG. 2 is a block diagram illustrating a main functional configuration of image forming apparatus 1. Image forming apparatus 1 includes control section 40, head unit drive section 50, conveyance drive section 60, image processing section 70, input/output interface 80, and pattern generating section 100.

Control section 40 includes CPU 41 (Central Processing Unit), RAM 42 (Random Access Memory), ROM 43 (Read Only Memory), and storage section 44, and integrally controls overall operation of image forming apparatus 1.

CPU 41 reads out programs for various types of control and setting data stored in ROM 43 and stores the programs and setting data in RAM 42, and executes the programs to perform various types of arithmetic processing.

RAM 42 provides CPU 41 with a memory space for work, and stores temporary data. RAM 42 may include a non-volatile memory.

ROM 43 stores the programs for various types of control, the setting data, and the like to be executed by CPU 41. Note that, a rewritable non-volatile memory such as an EEPROM (Electrically Erasable Programmable Read Only Memory) and a flash memory may be used instead of ROM 43.

Storage section 44 stores a print job that is input from an external apparatus (not illustrated) via input/output interface 80, image data of an image to be recorded by the print job, or the like. As storage section 44, an HDD (Hard Disk Drive) may be used, for example, and a DRAM (Dynamic Random Access Memory) or the like may be used in combination.

Head unit drive section 50 supplies a driving signal in accordance with the image data to the recording element of head unit 24 based on the control by control section 40 at an appropriate timing so that the ink in an amount in accordance with a pixel value of image data is discharged from a nozzle of head unit 24.

Conveyance drive section 60 supplies a driving signal to a conveyance drum motor provided in conveyance drum 211 based on a control signal supplied from control section 40 to rotate conveyance drum 211 at a predetermined speed and timing. Further, conveyance drive section 60 supplies a driving signal to a motor for operating medium supply section 12, transfer unit 22, and delivery section 27 based on a control signal supplied from control section 40 to cause recording medium P to be supplied to conveyance section 21 and to cause recording medium P to be ejected from conveyance section 21.

Image processing section 70 performs predetermined image processing to the image data stored in storage section 44, and stores the resulting image data in storage section 44. The image processing encompasses, in addition to correction processing that corrects the image data by applying a correction table (not illustrated) or the like to the image data, color conversion processing, tone correction processing, pseudo continuous tone processing, and the like.

Input/output interface 80 is connected to an input/output interface of the external apparatus (for example, a personal computer), and mediates transmission and reception of data between control section 40 and the external apparatus. Input/output interface 80 is configured with, for example, either various serial interfaces or various parallel interfaces, or a combination thereof.

Further, in the present embodiment, after the image processing such as the tone correction processing (gamma correction or the like) is performed to the image data as needed, the pseudo continuous tone processing in which image data with 8 bits in each pixel are converted into pseudo continuous tone image data with 1 bit in each pixel (2 gradations) is performed. As a method of the pseudo continuous tone processing, dither processing in which each pixel value is binarized in accordance with each threshold value arranged in a matrix is used.

Image processing section 70 outputs processed image data obtained by performing the dither processing to the image data subjected to the image processing. A dither matrix configured with a plurality of cell elements is set in image processing section 70. In the dither matrix, threshold value TH corresponds to each cell element (corresponding to one pixel).

It is assumed here that the number of cell elements in a main scanning direction is M and the number of cell elements in a sub scanning direction is N. For example, in a case where M is assumed as 256 and N is assumed as 256, the number of the elements is 256×256=65536, so there are 65536 threshold values.

Image processing section 70 inputs an image signal for each pixel, determines sai and saj indicative of the position of the pixel in the dither matrix by the below-described equations 1 and 2, and specifies a numerical value at the position (sai, saj) as cell element e corresponding to the pixel by the below-described equation 3.

$$sai=i\%M \dots (1)$$

$$saj=j\%N \dots (2)$$

$$e=sai+saj\times M \dots (3)$$

In the equations, i and j denote position coordinates of the inputted pixel in the entire image, and % denotes a modulus operator.

Subsequently, image processing section 70 determines two threshold values TH that correspond to the cell element e corresponding to the pixel. Threshold values TH above can be taken out by inputting the value of the cell element e in look-up table TBL [M×N] stored in storage section 44 or the like (see equation 4).

$$TH=TBL[e] \dots (4)$$

Look-up table TBL [M×N] holds threshold values TH of every cell element e. Since the dither matrix includes 65536 elements, 65536 numbers are arranged in TBL [M×N].

Image processing section 70 then calculates SC that is image data after the dither processing by the following equation 5.

$$SC=(IS-TH) \dots (5)$$

Note that, IS denotes image data before performing the dither processing. In equation 5, SC=0 (non-dotted) when SC<0, and SC=1 (dotted) when SC>0.

In image processing section 70, the above-described processing is repeatedly performed for each pixel.

Based on the image data of the Y, M, C, and K colors to which the pseudo continuous tone processing is performed by image processing section 70, control section 40 controls head unit drive section 50 such that the recording elements of four head units 24 discharge the inks onto recording medium P. Thus, the image is formed on recording medium P.

Pattern generating section 100 generates a dot pattern in each of head units 24 of two or more colors. The dot patterns generated by pattern generating section 100 are used in the dither processing described above.

Specifically, in a case where a first dot pattern of a first color with a uniform density and a second dot pattern of a second color with a uniform density are combined, pattern generating section 100 adjusts each dot position in the second dot pattern based on a positional relationship of each dot in the first dot pattern.

The first color is, for example, the C color. The second color is, for example, the M color. The first dot pattern is a dot pattern in a random dot arrangement by the FM screening.

The density of each of the dot patterns of the C and M colors is not so high by itself, but the density of an overlapping portion of the respective dot patterns of the C and M colors becomes high, and the overlapping portion becomes easily visually recognizable by an observer.

A skin color portion of a face photograph can be expressed mainly by the respective dot patterns of the M and Y colors when the density is low, and a dot pattern(s) of the C color or/and the K color is/are added thereto as the density becomes higher. As a result of the addition of the dot pattern of the C color as mentioned above, there are more cases where the dot patterns of the C and M colors overlap.

In the case of the FM screening, when a ratio of overlapping of the respective dot patterns of the C and M colors increases, the feeling of roughness peculiar to random dots increases. Accordingly, a dot arrangement in which the overlapping of the respective dot patterns of the C and M colors is reduced is desired.

Given the above, in the present embodiment, pattern generating section 100 generates the first dot pattern in a random dot arrangement. Pattern generating section 100 then adjusts each dot position of the second dot pattern based on the positional relationship of each dot in the first dot pattern.

In the case of the skin color, the M color (the second color) has a larger ratio of dots than the C color (the first color). Accordingly, pattern generating section 100 adjusts the number of dots of the second dot pattern to be more than the number of dots of the first dot pattern and to be equal to or less than twice the number of dots of the first dot pattern.

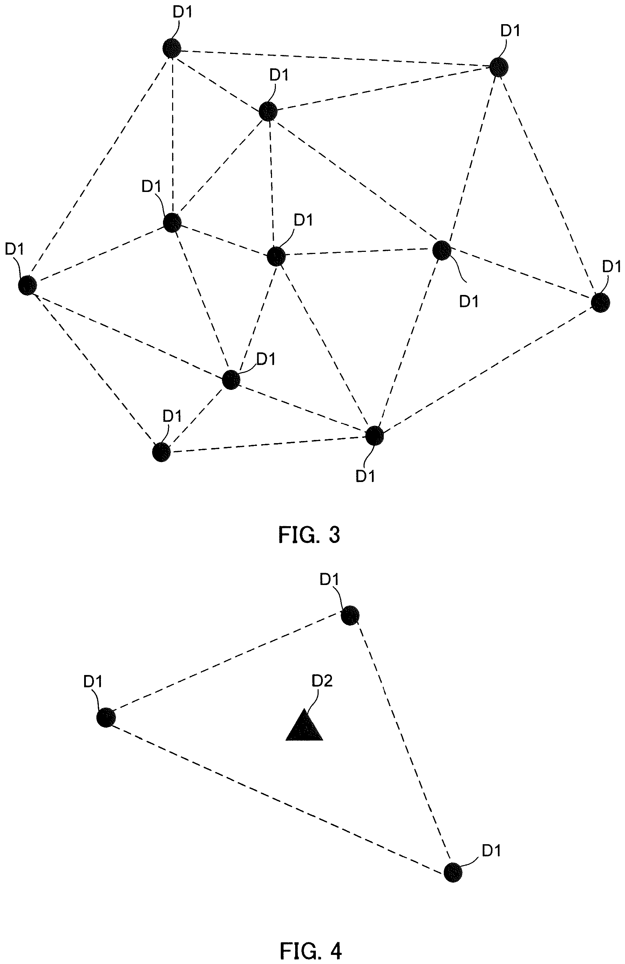

More specifically, as illustrated in FIGS. 3 and 4, pattern generating section 100 generates the second dot pattern by generating dot D2 at a position of a center of gravity of a Delaunay triangle (see the broken line) formed by three dots D1 among each dot D1 of the first dot pattern.

The Delaunay triangle is a triangle that includes, as sides, line segments that connect adjacent generating points. Accordingly, the respective three dots mentioned above are located at positions such that there is no other dot on a line connecting two dots, and such that the dots have a positional relationship in which the dots are adjacent to each other.

A plurality of Delaunay triangles as described above are generated by the first dot pattern. Further, the second dot pattern is generated by generating dot D2 at the position of the center of gravity of each Delaunay triangle.

Thus, it is possible to generate dot patterns of the M color (the second color) and the C color (the first color) at positions where the dot patterns do not overlap with each other. As a result, it is possible to reduce the overlapping of the respective dot patterns of the two colors.

Further, by generating the second dot pattern as described above, a ratio of the number of dots of the first dot pattern to the number of dots of the second dot pattern can be substantially 1 to 2. Note that, the substantially 1 to 2 discussed here encompasses, in addition to a ratio of the number of dots of the first dot pattern to the number of dots of the second dot pattern of 1 to 2, ratios of the number of dots of the first dot pattern to the number of dots of the second dot pattern within an error range of approximately 1% as well.

Further, pattern generating section 100 causes the generated first dot pattern and the generated second dot pattern to be stored in storage section 44. Storage section 44 stores each dot of the first dot pattern in association with the first color, and stores each dot of the second dot pattern in association with the second color.

Thus, when performing the image processing such as the dither matrix processing by using the first dot pattern and the second dot pattern, it is possible to accurately distinguish between the first color and the second color.

Further, image processing section 70 generates the dither matrix by using the first dot pattern and the second dot pattern that are generated by pattern generating section 100 as described above. Methods for generating the dither matrix include, for example, a void-and-cluster method.

This method provides an initial dot pattern (the first dot pattern and the second dot pattern), and specifies the sparsest position (void) and the densest position (cluster) in the dot pattern by low-pass filtering or the like. The method then adds dots one by one to a sparse position or deletes dots one by one from a dense position to generate a dot pattern for all gradation values, and ultimately generates a dither matrix in which an order for dots to grow is represented by numerical values.

Image processing section 70 generates the dither matrix by the void-and-cluster method. Image processing section 70 then performs the foregoing pseudo continuous tone processing, based on the generated dither matrix, to the image data.

Thus, in a case where an image with the skin color is generated, for example, it is possible to reduce the feeling of roughness due to the overlapping of the C and M colors.

Further, dot patterns may be generated as described above for the K and Y colors as well. With respect to the K and Y colors, however, the dot patterns of the K and Y colors may also be generated at random since the K and Y colors hardly affect the visual density even when dots of the K and Y colors overlap with dots of another color.

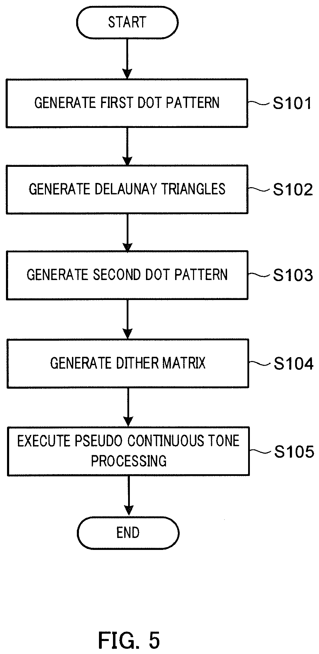

Next, an operation example when executing pattern generation control in image forming apparatus 1 will be described. FIG. 5 is a flowchart illustrating one operation example when executing the pattern generation control in image forming apparatus 1. The processing in FIG. 5 is appropriately executed when control section 40 receives an execution command of a print job relating to the pseudo continuous tone processing.

As illustrated in FIG. 5, pattern generating section 100 generates the first dot pattern (step S101). Pattern generating section 100 generates Delaunay triangles with each dot based on the first dot pattern (step S102).

Pattern generating section 100 generates the second dot pattern based on the generated Delaunay triangles (step S103). Next, pattern generating section 100 generates the dither matrix by using the generated first dot pattern and the generated second dot pattern (step S104).

Pattern generating section 100 then executes the pseudo continuous tone processing (step S105). Thereafter, the control ends.

Note that, in step S104, the dither matrix is generated by sequentially generating dot patterns with a lower density or a higher density by removing or adding dots one by one in the initial dot pattern generated in step S103 by the void-and-cluster method. When generating a dot pattern with a higher density than the initial dot pattern generated in step S103 described above, the dither matrix may be generated by, in addition to the void-and-cluster method, adding dots one by one with AM growth to generate the pattern. The AM growth discussed here means growing a dot size by continuing to add dots adjacent to a dot that is already present. When using the void-and-cluster method on a high density side, the distance between dots may become locally short in the vicinity of an added dot. Accordingly, in such a case, growing the dot size by the AM growth makes it possible to create a pattern with a high density without breaking a positional relationship between the dots determined in the initial pattern since the number of dots does not change. As a result, it is possible to restrain the distance between the dots from becoming locally short, thus preventing the granularity from deteriorating.

According to the present embodiment configured as described above, it is possible to reduce overlapping of respective dot patterns of two colors.

Further, since a dot pattern is generated for each one kind of color, the processing can be simple in comparison with a configuration in which two kinds of colors are processed simultaneously.

Further, since the second dot pattern is adjusted based on the positional relationship of each dot in the first dot pattern, the positional relationship between each dot of the first dot pattern and each dot of the second dot pattern can become uniform easily.

For example, when arranging each dot of the second dot pattern randomly, such a case may occur where a dot of the second dot pattern is located extremely close to each dot of the first dot pattern so that both are likely to overlap at the time of the formation on recording medium P.

In the present embodiment, however, the positional relationship between each dot of the first dot pattern and each dot of the second dot pattern becomes uniform so that overlapping of both can be reduced at the time of the formation on recording medium P.

Further, since the second dot pattern is generated based on triangles configured with three dots among the dots of the first dot pattern, the ratio of the number of dots of the first dot pattern to the number of dots of the second dot pattern can be substantially 1 to 2. That is, when generating a dot pattern of a color (for example, the skin color) in which the number of dots of the second dot pattern is at higher density than the number of dots of the first dot pattern, it is possible to realize a dot arrangement with uniformity in each color and with reduced overlapping.

Note that, in the embodiment described above, the first dot pattern is configured in a random dot arrangement, but the present invention is not limited thereto. For example, pattern generating section 100 may perform dot position adjustment of the first dot pattern by Voronoi tessellation.

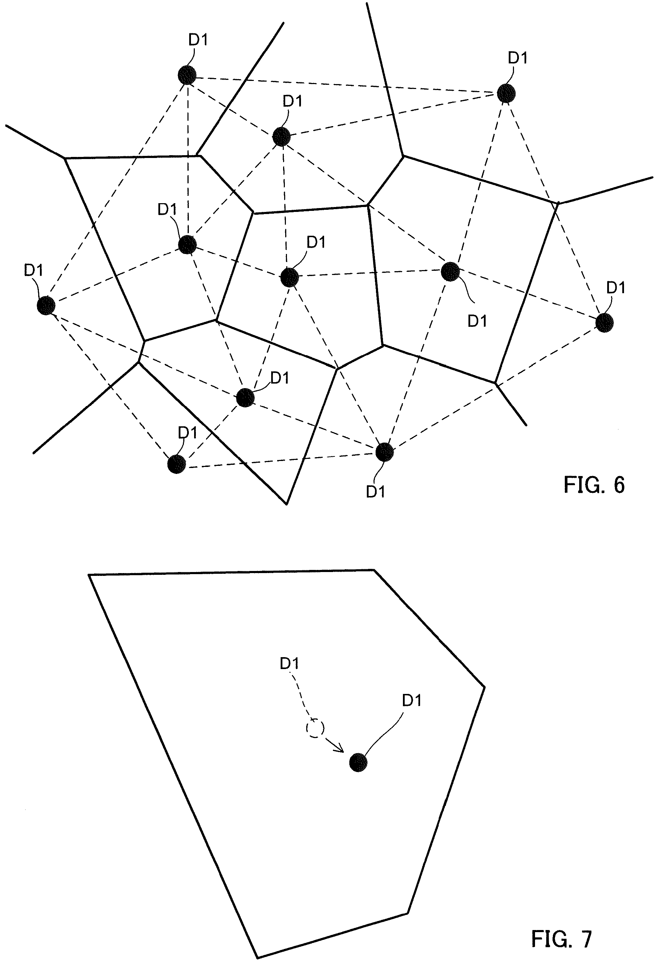

Specifically, as illustrated in FIG. 6, pattern generating section 100 first generates the first dot pattern with random dot positions. Pattern generating section 100 generates a plurality of regions (regions surrounded by the solid lines) surrounding each dot D1 by performing the Voronoi tessellation by using each dot D1 as generating points.

Then, as illustrated in FIG. 7, pattern generating section 100 moves each dot D1 (the broken line) to a position of a center of gravity of a polygon (Voronoi polygon) forming each of the plurality of regions so that each dot D1 is positioned at the position of dot D1 (the black circle).

Pattern generating section 100 performs such position adjustment for each dot D1, then performs the Voronoi tessellation again to adjust the position of dot D1. Pattern generating section 100 repeatedly performs such position adjustment until dot D1 matches the position of the center of gravity of a newly generated Voronoi polygon.

Thus, it is possible to generate the first dot pattern with good dispersibility. Further, since the second dot pattern is generated by the first dot pattern for which the position adjustment is performed, the dispersibility of the second dot pattern can also be good.

Further, although the ratio of the number of dots of the first dot pattern to the number of dots of the second dot pattern is substantially 1 to 2 in the embodiment described above, the present invention is not limited thereto. For example, dot D2 of the second dot pattern may be generated at a position of a center of gravity of, in addition to a Delaunay triangle, a quadrangle configured with four dots D1 among each dot of the first dot pattern. That is, in a generation pattern of dot D2 of the second dot pattern, a pattern in which dot D2 is generated at the position of the center of gravity of the triangle configured with three dots D1 may be mixed with a pattern in which dot D2 is generated at the position of the center of gravity of the quadrangle configured with four dots D1.

Thus, it is possible to configure the number of dots of the second dot pattern to be less than twice the number of dots of the first dot pattern so that a ratio of a number of dots of each color can be easily adjusted. Further, the ratio of the number of dots of each color may also be adjusted by causing no dot D2 to be generated in some of each triangle configured with dots D1.

Further, although the C color is exemplified as the first color and the M color is exemplified as the second color in the embodiment described above, the first color and the second color can be appropriately selected in accordance with colors forming an image (colors in which every color is combined).

Further, although pattern generating section 100, image processing section 70 and the like are separated in the embodiment described above, the present invention is not limited thereto. For example, the image processing section may have a function of the pattern generating section.

Although embodiments of the present invention have been described and illustrated in detail, the disclosed embodiments are made for purposes of illustration and example only and not limitation. The scope of the present invention should be interpreted by terms of the appended claims.

Reference Signs List

1 Image forming apparatus
10 Sheet feed section
11 Sheet feed tray
12 Medium supply section
20 Image forming section
21 Conveyance section
22 Transfer unit
23 Heating section
24 Head unit
25 Fixing section
27 Delivery section
30 Sheet ejection section
31 Sheet tray

40 Control section
44 Storage section
50 Head unit drive section
60 Conveyance drive section
70 Image processing section
80 Input/output interface
100 Pattern generating section

**Claims**

1. An image forming apparatus (1), comprising:

   an image forming section (20) that includes ink discharge sections (24) of two or more colors and is configured to form an image on a recording medium (P) by using the ink discharge sections (24); and
   a pattern generating section (100) that is configured to generate a dot pattern in each of the ink discharge sections (24) of two or more colors, wherein
   the pattern generating section (100) is configured to generate a first dot pattern of a first color with a uniform density and a second dot pattern of a second color with a uniform density,
   **characterised in that**,
   in a case where the first dot pattern and the second dot pattern are combined,

   the pattern generating section (100) is configured to generate the second dot pattern by generating a dot (D2) at a position of a center of gravity of a polygon formed by a plurality of dots (D1) among each dot (D1) of the first dot pattern, the plurality of dots (D1) being located at positions such that there is no other dot on a line connecting two dots of the plurality of dots (D1) and such that the plurality of dots (D1) have a positional relationship in which the plurality of dots (D1) are adjacent to each other, and the pattern generating section (100) is configured to adjust the second dot pattern based on the positional relationship of each dot (D1) in the first dot pattern.

2. The image forming apparatus (1) according to claim 1, wherein
   the pattern generating section (100) is configured to cause a number of dots (D2) of the second dot pattern to be more than a number of dots (D1) of the first dot pattern.

3. The image forming apparatus (1) according to claim 2, wherein
   the pattern generating section (100) is configured to cause the number of dots (D2) of the second dot pattern to be equal to or less than twice the number of dots (D1) of the first dot pattern.

4. The image forming apparatus (1) according to claim 1, wherein
the pattern generating section (100) is configured to generate a plurality of regions surrounding each dot (D1) in the first dot pattern by Voronoi tessellation, and to adjust each dot position in the first dot pattern by moving a corresponding dot (D1) to a position of a center of gravity of a polygon forming each of the plurality of regions.

5. The image forming apparatus (1) according to any one of claims 1 to 4, comprising:
a storage section (44) that is configured to store each dot (D1) of the first dot pattern in association with the first color, and to store each dot (D2) of the second dot pattern in association with the second color.

6. The image forming apparatus (1) according to any one of claims 1 to 5, comprising:
an image processing section (70) that is configured to generate a dither matrix by using the first dot pattern and the second dot pattern that are generated by the pattern generating section (100).

7. A dot pattern adjustment method by an image forming apparatus (1) comprising an image forming section (20) that includes ink discharge sections (24) of two or more colors and forms an image on a recording medium (P) by using the ink discharge sections (24), the method comprising:

generating a dot pattern in each of the ink discharge sections (24) of two or more colors, wherein
a first dot pattern of a first color with a uniform density and a second dot pattern of a second color with a uniform density are generated;
**characterised in that** the method further comprises:
in a case where the first dot pattern and the second dot pattern are combined,

generating the second dot pattern by generating a dot (D2) at a position of a center of gravity of a polygon formed by a plurality of dots (D1) among each dot (D1) of the first dot pattern, the plurality of dots (D1) being located at positions such that there is no other dot on a line connecting two dots of the plurality of dots (D1) and such that the plurality of dots (D1) have a positional relationship in which the plurality of dots (D1) are adjacent to each other, and
adjusting the second dot pattern based on the positional relationship of each dot (D1) in the first dot pattern.

**Patentansprüche**

1. Eine Bilderzeugungsvorrichtung (1), aufweisend:

einen Bilderzeugungsabschnitt (20), der Tintenausstoßabschnitte (24) von zwei oder mehr Farben umfasst und konfiguriert ist, um unter Verwendung der Tintenausstoßabschnitte (24) ein Bild auf einem Aufzeichnungsmedium (P) zu erzeugen; und
einen Mustererzeugungsabschnitt (100), der konfiguriert ist, um ein Punktmuster in jedem der Tintenausstoßabschnitte (24) mit zwei oder mehr Farben zu erzeugen, wobei
der Mustererzeugungsabschnitt (100) konfiguriert ist, um ein erstes Punktmuster einer ersten Farbe mit einer einheitlichen Dichte und ein zweites Punktmuster einer zweiten Farbe mit einer einheitlichen Dichte zu erzeugen,
**dadurch gekennzeichnet, dass**
in einem Fall, in dem das erste Punktmuster und das zweite Punktmuster kombiniert werden,

der Mustererzeugungsabschnitt (100) konfiguriert ist, um das zweite Punktmuster zu erzeugen, indem ein Punkt (D2) an einer Position eines Schwerpunkts eines Polygons erzeugt wird, das durch eine Vielzahl von Punkten (D1) unter jedem Punkt (D1) des ersten Punktmusters ausgebildet wird, wobei die Vielzahl von Punkten (D1) an solchen Positionen angeordnet ist, dass es keinen anderen Punkt auf einer Linie gibt, die zwei Punkte der Vielzahl von Punkten (D1) verbindet, und so, dass die Vielzahl von Punkten (D1) eine Positionsbeziehung aufweisen, in der die Vielzahl von Punkten (D1) einander benachbart sind, und
der Mustererzeugungsabschnitt (100) konfiguriert ist, um das zweite Punktmuster basierend auf der Positionsbeziehung jedes Punkts (D1) in dem ersten Punktmuster einzustellen.

2. Die Bilderzeugungsvorrichtung (1) nach Anspruch 1, wobei
der Mustererzeugungsabschnitt (100) konfiguriert ist, um zu bewirken, dass eine Anzahl an Punkten (D2) des zweiten Punktmusters größer ist als eine Anzahl an Punkten (D1) des ersten Punktmusters.

3. Die Bilderzeugungsvorrichtung (1) nach Anspruch 2, wobei
der Mustererzeugungsabschnitt (100) konfiguriert ist, um zu bewirken, dass die Anzahl an Punkten (D2) des zweiten Punktmusters gleich oder kleiner als das Doppelte der Anzahl an Punkten (D1) des ersten Punktmusters ist.

4. Die Bilderzeugungsvorrichtung (1) nach Anspruch 1, wobei
der Mustererzeugungsabschnitt (100) konfiguriert ist, um eine Vielzahl von Bereichen, die jeden Punkt (D1) in dem ersten Punktmuster umgeben, durch Voronoi-Tesselierung zu erzeugen, und um jede Punktposition in dem ersten Punktmuster einzustellen, indem ein korrespondierender Punkt (D1) zu einer Position eines Schwerpunkts eines Polygons bewegt wird, das jeden der Vielzahl von Bereichen ausbildet.

5. Die Bilderzeugungsvorrichtung (1) nach einem der Ansprüche 1 bis 4, aufweisend:
einen Speicherabschnitt (44), der konfiguriert ist, um jeden Punkt (D1) des ersten Punktmusters in Verbindung mit der ersten Farbe zu speichern, und um jeden Punkt (D2) des zweiten Punktmusters in Verbindung mit der zweiten Farbe zu speichern.

6. Die Bilderzeugungsvorrichtung (1) nach einem der Ansprüche 1 bis 5, aufweisend:
einen Bildverarbeitungsabschnitt (70), der konfiguriert ist, um eine Zittermatrix unter Verwendung des ersten Punktmusters und des zweiten Punktmusters, die durch den Mustererzeugungsabschnitt (100) erzeugt werden, zu erzeugen.

7. Ein Verfahren zum Einstellen eines Punktmusters durch eine Bilderzeugungsvorrichtung (1), die einen Bilderzeugungsabschnitt (20) aufweist, der Tintenausstoßabschnitte (24) von zwei oder mehr Farben umfasst und ein Bild auf einem Aufzeichnungsmedium (P) unter Verwendung der Tintenausstoßabschnitte (24) ausbildet, wobei das Verfahren aufweist:

Erzeugen eines Punktmusters in jedem der Tintenausstoßabschnitte (24) mit zwei oder mehr Farben, wobei
ein erstes Punktmuster einer ersten Farbe mit einer einheitlichen Dichte und ein zweites Punktmuster einer zweiten Farbe mit einer einheitlichen Dichte erzeugt werden;
**dadurch gekennzeichnet, dass** das Verfahren ferner aufweist:
in einem Fall, in dem das erste Punktmuster und das zweite Punktmuster kombiniert werden,

Erzeugen des zweiten Punktmusters durch Erzeugen eines Punkts (D2) an einer Position eines Schwerpunkts eines Polygons, das durch eine Vielzahl von Punkten (D1) unter jedem Punkt (D1) des ersten Punktmusters ausgebildet wird, wobei die Vielzahl von Punkten (D1) an solchen Positionen angeordnet ist, dass es keinen anderen Punkt auf einer Linie gibt, die zwei Punkte der Vielzahl von Punkten (D1) verbindet, und so, dass die Vielzahl von Punkten (D1) eine Positionsbeziehung aufweisen, in der die Vielzahl von Punkten (D1) einander benachbart sind, und
Einstellen des zweiten Punktmusters basierend auf der Positionsbeziehung jedes Punkts (D1) in dem ersten Punktmuster.

**Revendications**

1. Appareil de formation d'image (1), comprenant :

une section de formation d'image (20) qui comporte des sections de décharge d'encre (24) de deux ou plus de deux couleurs et est configurée pour former une image sur un support d'enregistrement (P) par l'utilisation des sections de décharge d'encre (24) ; et
une section de génération de motif (100) qui est configurée pour générer un motif de points dans chacune des sections de décharge d'encre (24) de deux ou plus de deux couleurs, où
la section de génération de motif (100) est configurée pour générer un premier motif de points d'une première couleur avec une densité uniforme et un deuxième motif de points d'une deuxième couleur avec une densité uniforme,
**caractérisé en ce que**
dans un cas dans lequel le premier motif de points et le deuxième motif de points sont combinés,
la section de génération de motif (100) est configurée pour générer le deuxième motif de points par la génération d'un point (D2) à une position d'un centre de gravité d'un polygone formé par une pluralité de points (D1) parmi chaque point (D1) du premier motif de points, la pluralité de points (D1) étant situés à des positions de sorte qu'il n'y a pas d'autre point sur une ligne reliant deux points de la pluralité de points (D1) et de sorte que la pluralité de points (D1) ont une relation positionnelle dans laquelle la pluralité de points (D1) sont adjacents les uns aux autres, et
la section de génération de motif (100) est configurée pour régler le deuxième motif de points sur la base de la relation positionnelle de chaque point (D1) dans le premier motif de points.

2. Appareil de formation d'image (1) selon la revendication 1, dans lequel
la section de génération de motif (100) est configurée pour amener un nombre de points (D2) du deuxième motif de points à être supérieur à un nombre de points (D1) du premier motif de points.

3. Appareil de formation d'image (1) selon la revendication 2, dans lequel
   la section de génération de motif (100) est configurée pour amener le nombre de points (D2) du deuxième motif de points à être inférieur ou égal à deux fois le nombre de points (D1) du premier motif de points.

4. Appareil de formation d'image (1) selon la revendication 1, dans lequel
   la section de génération de motif (100) est configurée pour générer une pluralité de régions entourant chaque point (D1) dans le premier motif de points par pavage de Voronoï, et pour régler chaque position de point dans le premier motif de points par le déplacement d'un point (D1) correspondant à une position d'un centre de gravité d'un polygone formant chacune de la pluralité de régions.

5. Appareil de formation d'image (1) selon l'une quelconque des revendications 1 à 4, comprenant :
   une section de mémorisation (44) qui est configurée pour mémoriser chaque point (D1) du premier motif de points en association avec la première couleur, et pour mémoriser chaque point (D2) du deuxième motif de points en association avec la deuxième couleur.

6. Appareil de formation d'image (1) selon l'une quelconque des revendications 1 à 5, comprenant :
   une section de traitement d'image (70) qui est configurée pour générer une matrice de tramage par l'utilisation du premier motif de points et du deuxième motif de points qui sont générés par la section de génération de motif (100).

7. Procédé de réglage de motif de points par un appareil de formation d'image (1) comprenant une section de formation d'image (20) qui comporte des sections de décharge d'encre (24) de deux ou plus de deux couleurs et forme une image sur un support d'enregistrement (P) par l'utilisation des sections de décharge d'encre (24), le procédé comprenant l'étape consistant en :

   la génération d'un motif de points dans chacune des sections de décharge d'encre (24) de deux ou plus de deux couleurs, où
   un premier motif de points d'une première couleur avec une densité uniforme et un deuxième motif de points d'une deuxième couleur avec une densité uniforme sont générés ;
   **caractérisé en ce que** le procédé comprend en outre les étapes consistant en :
   dans un cas dans lequel le premier motif de points et le deuxième motif de points sont combinés,

   la génération du deuxième motif de points par la génération d'un point (D2) à une position d'un centre de gravité d'un polygone formé par une pluralité de points (D1) parmi chaque point (D1) du premier motif de points, la pluralité de points (D1) étant situés à des positions de sorte qu'il n'y a pas d'autre point sur une ligne reliant deux points de la pluralité de points (D1) et de sorte que la pluralité de points (D1) ont une relation positionnelle dans laquelle la pluralité de points (D1) sont adjacents les uns aux autres, et
   le réglage du deuxième motif de points sur la base de la relation positionnelle de chaque point (D1) dans le premier motif de points.

FIG. 1

40    1

CONTROL
SECTION

41

CPU

42

RAM

43

ROM

44

STORAGE
SECTION

50 ── HEAD UNIT DRIVE SECTION

60 ── CONVEYANCE DRIVE SECTION

70 ── IMAGE PROCESSING SECTION

80 ── INPUT/OUTPUT INTERFACE

100 ── PATTERN GENERATING SECTION

FIG. 2

FIG. 3

FIG. 4

START

GENERATE FIRST DOT PATTERN — S101

GENERATE DELAUNAY TRIANGLES — S102

GENERATE SECOND DOT PATTERN — S103

GENERATE DITHER MATRIX — S104

EXECUTE PSEUDO CONTINUOUS TONE PROCESSING — S105

END

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10157167 A
- JP 2000092323 A
- US 2008079959 A1
- JP 2009100230 A